# EUROPEAN PATENT SPECIFICATION

(11) **EP 4 331 945 B1**
(45) Date of publication and mention of the grant of the patent: **28.01.2026**
(21) Application number: 22193815.2
(22) Date of filing: 05.09.2022
(51) Int. Cl.: B62B 3/02, B62B 3/08, B62B 1/00, B62B 1/16

(54) **TROLLEY**
HANDWAGEN
CHARIOT

(43) Date of publication of application: 06.03.2024
(73) Proprietor: Trust Care AB, 213 77 Malmö (SE)
(72) Inventor: Carloni, Diego, 216 18 Malmö (SE); Carloni, Christian, 211 18 Malmö (SE)
(74) Representative: AWA Sweden AB

(56) References cited:
- GB-A- 2 495 722
- US-A- 3 774 929
- US-A1- 2014 159 348
- US-A1- 2020 406 947

## Description

### Technical field

The present invention relates to a trolley comprising a first frame part, a second frame part and a load carrying member.

### Background art

Trolleys for transporting different types of goods or items between different locations are well known in the art. The trolleys are typically provided with a load carrying structure in which the goods or items is stored and with one or more wheels such that the trolley may be pushed or pulled between the different locations. The trolleys may be designed as a bag with wheels and a handle such that the user may push or pull the bag between the different locations. The trolleys facilitate the transportation of goods or items between the locations compared to conventional solutions such as different types of bags that a user has to carry between the locations.

However, one drawback with the trolleys of today is that they are challenging to load and unload because this action typically includes one or more bending moments for a user. The trolley is typically designed to basically look like a standing bag having its bottom closest to the ground. Thus, when loading or unloading the trolley, and especially when loading or unloading goods at the bottom of the trolley, the user has to bend significantly towards the ground.

In an attempt to address some parts of this issue, document US 2002/0011719 A1 discloses a multimode cart which is movable between a nested mode and an extended mode.

However, even though the solution disclosed by US 2002/0011719 A1 addresses some parts of the above issue, there is still a need in the art for improvements, e.g., in terms of improved safety and usability for the user.

US patent application US3774929 A discloses a shopping cart having an auxiliary carrying section, wherein the shopping cart is movable between a collapsed position and an open position.

US patent application US 2020/0406947 A1 discloses a personal cart and method for using the personal cart.

### Summary

It is an object to mitigate, alleviate or eliminate one or more of the above-identified deficiencies in the art.

According to the invention, this object is solved by a trolley as defined in claim 1. Preferred embodiments are defined in the dependent claims. There is provided a trolley comprising:
a first frame part having two interconnected front legs, wherein the first frame part comprises a handle at an upper portion thereof and at least one front wheel at a lower portion thereof;
a second frame part having two interconnected rear legs, wherein the rear legs comprise two rear wheels at a lower portion thereof and are each at an upper portion thereof pivotably connected to a respective front leg; and
a load carrying member being pivotably connected to the second frame part and having a connector being pivotably and slidably connected to the first frame part,
wherein the trolley is movable between a first state and a second state,
wherein in the first state, the second frame part is rotated relative to the first frame part such that the rear legs and front legs are moved towards each other and such that the load carrying member is rotated to a transportation position, the first state allowing the trolley to be pushed/pulled on the rear wheels; and
wherein in the second state, the second frame part is rotated relative to the first frame part such that lower portions of the front and rear legs are positioned at a distance from each other and such that the load carrying member is rotated to a use position, the second state allowing the trolley to be pushed/pulled on the front wheels and the rear wheels.

When the load carrying member is in the transportation position, it is preferably arranged in a substantially vertical position in relation to the ground. When the load carrying member is in the transportation position, and the trolley is in the first state, it allows a user to move the trolley in an easy and efficient way by pulling/pushing the trolley on the rear wheels. When the trolley is in the first state, it may be referred to as a trolley on two wheels. When the trolley is in the first state, the front wheel is preferably lifted form the ground such that the trolley is pushed/pulled on the rear wheels only. This is advantageous as it allows to reduce vibrations, especially when the user pulls the trolley on the rear wheels. Since the load carrying member in the transportation position is preferably arranged in a substantially vertical position in relation to the ground and is preferably more or less positioned directly above the rear wheels, the center of gravity and thereby the force from the weight of the goods is positioned more or less directly above and between the rear wheels, which in turn results in that inertia induced torques are kept at a minimum when the trolley is maneuvered.

When the load carrying member is in the use position, it is preferably arranged in a horizontal position in relation to the ground. Hence, the load carrying member may be rotatable about 90 degrees in order to be moved between the transportation position and the use position. When the load carrying member is in the use position, and the trolley is in the second state, it allows the user to load and unload the load carrying structure in an easy, efficient, and ergonomic way. In the preferred embodiment, the pivot points are arranged such that a bottom portion of the load carrying member as seen in the transportation position is moved upwardly when the trolley is moved into the use position. This is advantageous as it allows to reduce the need of performing unwanted bending motions which is typically needed when loading and unloading conventional trolleys. This is possible because when the load carrying structure is rotated to the use position, the load carrying structure may become arranged at a distance from the ground, preferably in hip height or knee height of the user depending on the length of the user. In addition, when the load carrying member is in the use position, and the trolley is in the second state, it allows the user to move the trolley in an easy and efficient way by pushing/pulling the trolley on the rear wheels and the front wheel. When the trolley is in the second state, it may be referred to as a trolley on at least three wheels, i.e., the trolley may be designed to be similar to a shopping cart, which is easy to load and unload but also to move between different places. It should be noted that the trolley may comprise more than one front wheel. In the preferred embodiment, the trolley has two front wheels.

The rear wheels may be rotated about a fixed rotational axis. The front wheel or wheels may be rotated about a respective rotatable rotational axis. The rotatable rotational axis is in this context intended to refer to an axis being different from a respective rotational axis of the front wheels. Preferably, the rotatable rotational axis is perpendicular, preferably with an offset to the rotational axis of the respective wheel. This is advantageous as it allows to increase controllability of the trolley such that the trolley is easy to push/pull on the wheels.

The rear legs pivotably being connected to the front legs allows the second frame part to be rotatable relative to the first frame part such that the rear legs and front legs are moved towards each other or away from each other. The load carrying member being pivotably connected to the second frame part and the connector being pivotably and slidably connected to the first frame part allows the load carrying member to be rotatable between the transportation position and the use position. The rear legs are connected to the respective front leg in a way such that the second frame part may be rotated relative to the first frame part. The load carrying member is connected to the second frame part and the connector is connected to the first frame part such that the load carrying member may be rotated between the transportation position and the use position. With the connector being pivotably and slidably connected to the first frame part, the connector is slidable in relation to the first frame part, preferably along the first frame part. Preferably, the connector is slidable in a recess provided in the first frame part.

Preferably, the trolley is designed such that the respective front legs and the respective rear legs are arranged at opposite sides of the load carrying member as seen along the rotational axis of the rear wheels.

The disclosed trolley is thus advantageous as it allows to move the trolley in an easy and efficient way between different locations as well as to load and unload the trolley in an easy, efficient, and ergonomic way. Hence, the trolley is designed in a way that fits the user who uses the trolley, both when moving the trolley but also when loading/unloading the trolley. By being able to provide an ergonomic trolley, it is possible to minimizes the risk of injury or harm to the user. Hence, an ergonomic trolley aims to improve the usability and to minimize the risk of injury and harm.

The connector may be spring biased relative to the first frame part from a first position the connector may be intended to assume when the trolley is in the first state towards a second position the connector may be intended to assume when the trolley is in the second state.

It may in this context be noted that in the preferred embodiment, there is a connector on each side of the opposite sides of the load carrying member. One or both of the connectors may be spring biased relative to the first frame part as indicated above.

When the trolley is in the first state, the first position the connector is intended to assume is preferably a position in which the load carrying member is kept in the transportation position. When the trolley is in the second stated, the second position the connector is intended to assume is preferably a position in which the load carrying member is kept in the use position. The connector being spring biased relative to the first frame part is advantageous as it allows for a user-friendly trolley which is easy to move between the first and second states. The connector being spring biased relative to the first frame part helps the user to move the trolley between the two states independently of the weight of the load carrying member.

The connector may be spring biased by a gas spring. This is advantageous as it allows to keep the trolley in the respective state with a reduced risk of the trolley to be moved away from the intended position in the respective state. Thereby, having the connector spring biased by the gas spring relative to the first frame part is advantageous as it improves the safety for the user when using the trolley in the different states. This is further advantageous as it allows for an easy movement of the trolley between the different states independently of the weight of the load carrying member. Hence, the trolley should preferably be easy to move between the states independently if the trolley is loaded or not. The gas spring may have a force between 50-100 N, preferably 70-80 N. The gas spring may have a spring stroke between 100-200 mm, preferably 150 mm, depending on dimensions of the trolley. One or both of the connectors may be spring biased relative to the first frame part using a gas spring as indicated above.

A movable pivot point, at which the connector may be pivotably and slidably connected to the first frame part, may be arranged to move along a front leg of the first frame part and to remain between a main pivot point at which the respective rear leg is connected to the respective front leg and the lower portion of the first frame part.

This is advantageous as it allows the load carrying member to be moved between a substantially vertical position, when in the transportation position, and a horizontal position, when in the use position. When the trolley is in the first state, the first position the connector is intended to assume is preferably the position closest to the lower portion of the first frame part. When the trolley is in the second state, the second position the connector is intended to assume is preferably farthest from the ground.

When the trolley is in the first state, a connecting point, at which the load carrying structure is pivotably connected to the second frame part, may be arranged above the movable pivot point, at which the connector of the load carrying structure is pivotably and slidably connected to the first frame part.

This is advantageous as it allows for the load carrying member to be positioned in the transportation position in a desired way, i.e., substantially vertical to the ground, when the trolley is in the first state. This is further advantageous as it allows the load carrying member to be positioned in the use position, i.e., horizontal to the ground, when the trolley is in the second state. Hence, when the front wheel and the rear wheels are moved away from each other, towards the second state of the trolley, the connecting point and the movable pivot point may be arranged along a substantially parallel line (i.e. such that the line may pass though both the connecting point and the movable pivot point) such that the load carrying member may be positioned in the use position.

The load carrying member may be pivotably connected to the second frame part about a fixed pivot point, the fixed pivot point being fixed relative to at least one of the second frame part and the load carrying member, preferably being fixed relative to both. This is advantageous as it allows the load carrying member to be moved between the transportation position and the use position in a desired way.

The connector is slidable along one of the front legs of the first frame part. This is advantageous as it allows the load carrying member to be moved between the transportation position and the use position in a desired way. This is further advantageous as it allows the load carrying member to be moved between the different positions in an easy and user-friendly way in which unwanted bending motions may be avoided.

The trolley may further comprise a locking mechanism pivotably connected to the load carrying structure and being configured to, when the trolley is in the first state, engage one of the front legs so as to lock the trolley in the first state and being configured to, when the trolley is in the second state, engage one of the rear legs so as to lock the trolley in the second state.

This is advantageous as it allows to, when the locking mechanism engages one of the front legs, prevents the trolley from moving from the first state towards the second state. This is advantageous as it allows to, when the locking mechanism engages one of the rear legs, prevents the trolley from moving from the second state towards the first state. When the locking mechanism is released, the locking mechanism permits the trolley to move between the first state and the second states.

The locking mechanism may be configured to lock the trolley in the first state by a locking member being pivotably connected to the load carrying structure and being configured to engage an element being fixedly arranged on one of the front legs. This is advantageous as it allows to, when the first locking mechanism engages one of the front legs, prevents the trolley from moving from the first state towards the second state. When the first locking mechanism is released, the first locking mechanism permits the trolley to move from the first state towards the second state.

The locking mechanism may be configured to lock the trolley in the second state by a locking member being pivotably connected to the load carrying structure and being configured to engage an element being fixedly arranged on one of the rear legs. This is advantageous as it allows to, when the second locking mechanism engages one of the rear legs, prevents the trolley from moving from the second state towards the first state. When the second locking mechanism is released, the second locking mechanism permits the trolley to move from the second state towards the first state.

In the preferred embodiment, the member of the locking mechanism locking the trolley in the first state is the same member locking the trolley in the second state. However, it is also conceivable to use other kinds of locking mechanisms where different members of the locking mechanism lock the trolley in the first state respectively the second state. It is even possible to have completely separate locking mechanisms located at a distance from each other, such as a first locking mechanism being configured to lock the trolley in the first state and being positioned on a first side of the trolley, and a second locking mechanism being configured to lock the trolley in the second state and being positioned on a second side of the trolley.

The trolley may further comprise a further handle being connected to the locking mechanism and being movable between a locking state and an opening state,
in the locking state, the locking mechanism is engaging one of the front legs or one of the rear legs so as to lock the trolley in the first state or the second state; and
in the opening state, the locking mechanism is released so as to permit the trolley to be moved from the first state or the second state and to be moved therefrom to the other one of the first or second state.

In order to move the trolley from the first state to the second state, the user may put one hand on the handle and another hand on the further handle. The further handle may be in an opening state as long as the user grips around the further handle. The user pushes the other hand gripping the further handle downwards in order for the movement of the trolley from the first state to the second state to be provided. Thereby, the load carrying member is rotated to the use position and the front wheel is applied to the ground. The wheels preferably provide a mutual movement which allows support for the mass of the load carrying member throughout the movement from the first state to the second state and thus results in the weight never being lost. Furthermore, the mutual movement causes a movement of the load carrying member which minimizes the movement of its center of mass, in particular laterally. The small horizontal forces that arise are transmitted through the low friction of the wheels via translation/rotation rods as a rotational movement, which means that little or no vertical forces needs to be "parried" or pressed. When the movement is performed, the user releases the grip of the further handle and the trolley is locked in the second state. This means, as already mentioned, that the movement from the second state may never be started involuntarily and is always locked after the execution, which, unlike known technology, eliminates the risk of e.g., forget important steps or cause involuntary "cutting" or squeezing and associated consequential damage.

For movement in the opposite direction, i.e., from the second state to the first state, the above is repeated in reverse order, the trolley returning to the first state, the front wheel being lifted again so that it does not attack the ground and the trolley resting on the rear wheels and a support of the first frame part. The fact that the front wheel leaves the ground reduces vibrations in cases where the user chooses to pull the trolley behind him.

Pulling/pushing in the manner described above allows a user's essentially upright position where the user pulls his/her hand gripping the further handle towards him-/herself and rotates with the torso so that the force from the movement is distributed between the legs, buttocks, torso and back, which in turn minimizes stress on the body in general and joints in particular. Existing solutions on the market regularly require the user to bend down/forward and/or be forced to load the arms, lumbar spine, and shoulders with unnecessary strain as a result.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

The invention is defined in claim 1, but may in short be said to relate to a trolley comprising a first frame part having two front legs and at least one front wheel; a second frame part having two rear legs and two rear wheels; and a load carrying member being pivotably connected to the second frame part and having a connector being pivotably and slidably connected to the first frame part, the trolley is movable between a first and a second state, in the first state, the second frame part is rotated relative to the first frame part such that the rear legs and front legs are moved towards each other and the load carrying member is rotated to a transportation position; and in the second state, the second frame part is rotated relative to the first frame part such that the front and rear legs are positioned at a distance from each other and the load carrying member is rotated to a use position.

### Brief description of the drawings

The invention will by way of example be described in more detail with reference to the appended schematic drawings, which shows a presently preferred embodiment of the invention.
Figure 1 discloses a trolley in a first state.
Figure 2 illustrates a trolley in a second state.
Figure 3 illustrates a trolley being moved from a second state towards a first state.
Figure 4 illustrates a trolley being moved from a first state towards a second state.
Figure 5 illustrates a first frame part and a second frame part of a trolley in more details.
Figures 6a-c illustrates a trolley in a first state and a locking mechanism configured to lock the trolley in the first state.
Figures 7a-b illustrates a trolley in a second state and a locking mechanism configured to lock the trolley in the second state.
Figures 8a-c illustrates a locking mechanism in further details.

### Detailed description

The present invention will now be described more fully hereinafter with reference to the accompanying drawings, in which currently preferred embodiments of the invention are shown. The present invention may, however, be embodied in many different forms and should not be constructed as limited to the embodiments set forth herein; rather, these embodiments are provided for thoroughness and completeness, and to fully convey the scope of the invention to the skilled addressee. Like reference characters refer to like elements throughout.

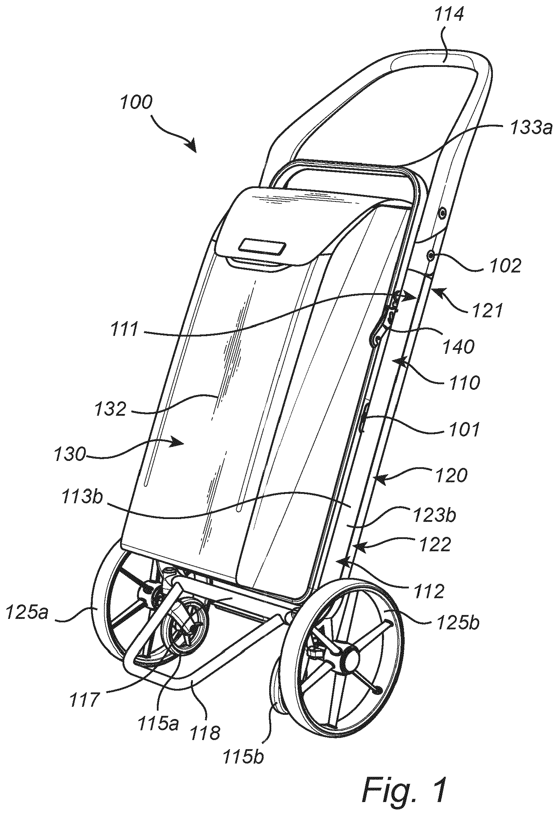

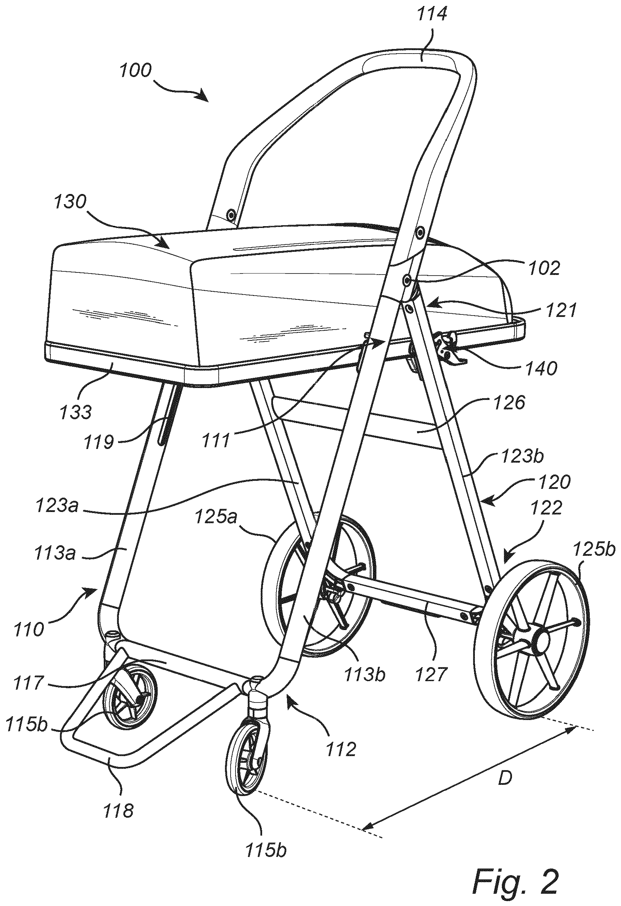

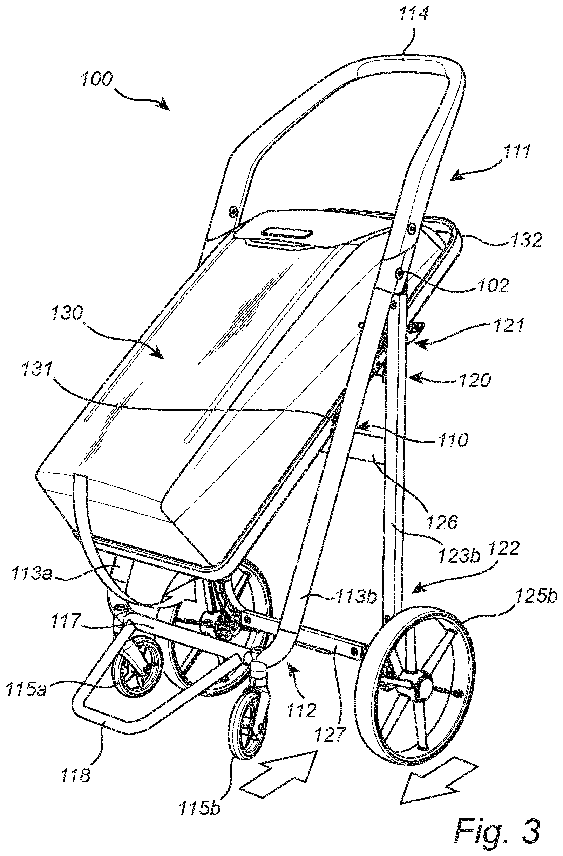

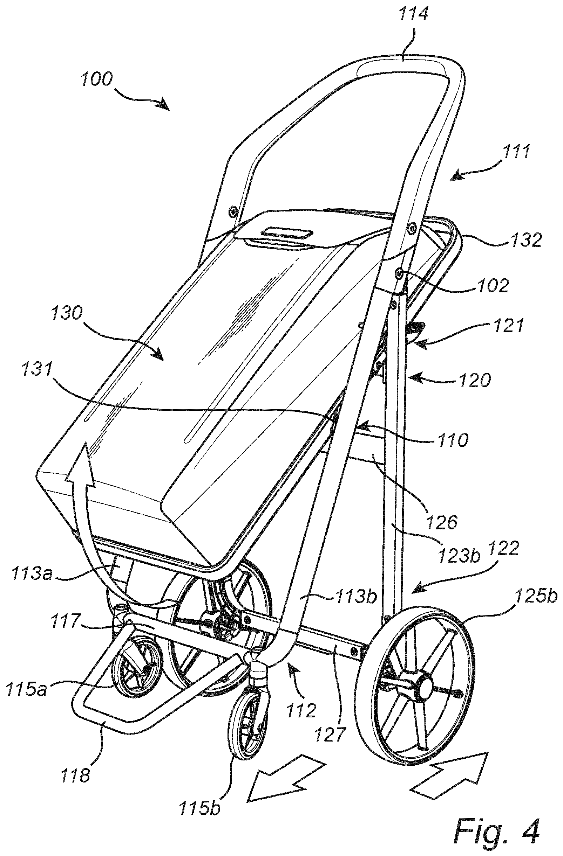

With reference to figure 1, a trolley 100 in a first state S1 is illustrated by way of example. With reference to figure 2, the trolley 100 in a second state S2 is illustrated by way of example. The trolley 100 is designed to be movable between the first state S1 and the second state S2. This is illustrated and discussed in connection with figures 3 and 4.

The trolley 100 comprises a first frame part 110 and a second frame part 120. As best illustrated in figure 2, the first frame part 110 is designed to have two interconnected front legs 113a, 113b. The first frame part 110 comprises a handle 114 at an upper portion 111 thereof. The trolley 100 comprises the handle 114 such that a user may be able to push/pull the trolley 100 in an easy way by using the handle 114. The first frame part 110 further comprises two front wheels 115a, 115b (as best illustrated in figure 2) at a lower portion 112 thereof. It should however be noted that the trolley 100 may comprise one front wheel or more than two front wheels. The first frame part 110 further comprises a member 117 configured to connect the respective front leg 113a, 113b at the lower portion 112 thereof.

The second frame part 120 is designed to have two interconnected rear legs 123a, 123b. The rear leg 123b is, at an upper portion 121 thereof, pivotably connected to the front leg 113b at a main pivot point 102. It should however be understood by the skilled person that, although not illustrated, that the rear leg 123a is, at the upper portion 121 thereof, pivotably connected to the front leg 123a at a main pivot point as well. Hence, each of the rear legs 123a, 123b are, at the upper portion 121 thereof, pivotably connected to the respective front leg 113a, 113b at a main pivot point 102. As best illustrated in figure 2, the second frame part 120 comprises two rear wheels 125a, 125b at a lower portion 122 thereof. It should however be noted that the second frame part 120 may comprise more than two rear wheels. The second frame part 120 comprises a connecting member 126 configured to connect the respective rear leg 123a, 123b at a middle portion thereof. The second frame part 120 further comprises a member 127 configured to connect the respective rear legs 123a, 123b at the lower portion 122 thereof.

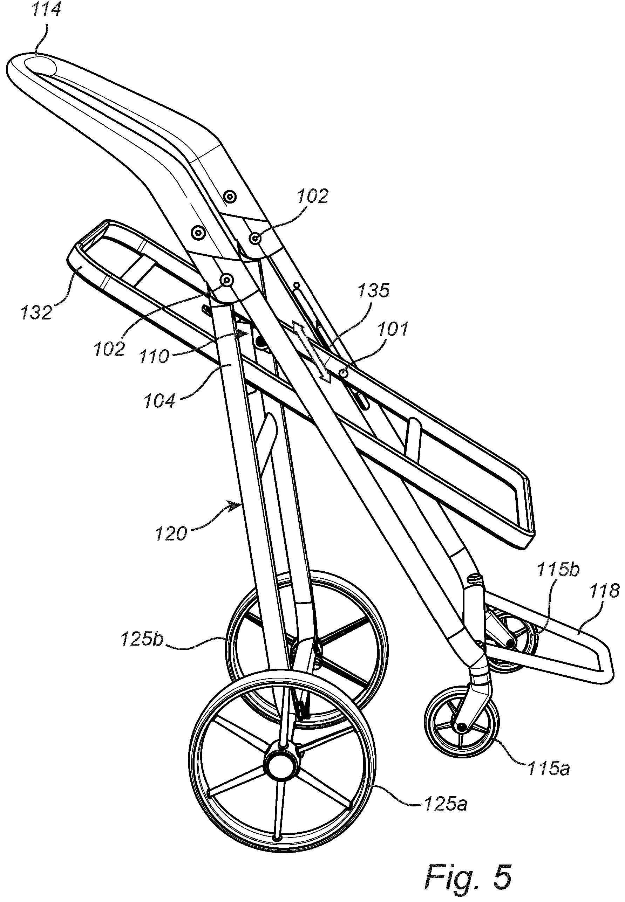

The trolley 100 further comprises a load carrying member 130. The load carrying member 130 is pivotably connected to the second frame part 120 at a connecting point 104 (see figure 5). The load carrying member 130 is preferably pivotably connected to the second frame part 120 about a fixed pivot point. The fixed pivot point may be fixed relative to the second frame part 120 and/or the load carrying member 130. The load carrying member 130 comprises a connector 131 which is pivotably and slidably connected to the first frame part 110 at a movable pivot point 101. The connector 131 may be pivotably and slidably connected to the first frame part 110 at each side of the load carrying structure 130 at two separate movable pivot points 101. The connector 131 may be slidable along one or both of the front legs 113a, 113b of the first frame part 110. When the trolley 100 is in the first state S1, as depicted in figure 1, the connecting point 104 is arranged above the movable pivot point 101. The load carrying member 130 comprises a load carrying structure 132 and a frame 133. The load carrying structure 132 may be designed as a bag configured to be loaded and unloaded with goods. The load carrying structure 132 may comprise one or more openings for loading and unloading goods to/from the load carrying structure 132. The frame 133 is configured to provide a structure for the load carrying structure 132 such that the load carrying member 132 is kept in place. The frame 133 may be designed to comprise a further handle 133a at an upper portion thereof. The further handle 133a may facilitate the movement of the trolley 100 between the first state S1 and the second state S2. This will be discussed in more detail further below.

The load carrying member 130 is configured to be in a transportation position TP when the trolley 100 is in the first state S1. The load carrying member 130 is configured to be in a use position UP when the trolley 100 is in the second state S2.

With reference to figure 5, the connector 131 (not illustrated in figure 5) is spring biased relative to the first frame part 110. The connector 131 is spring biased relative to the first frame part 110 from a first position P1 the connector 131 is intended to assume when the trolley 100 is in the first state S1 toward a second position P2 the connector 131 is intended to assume when the trolley 100 is in the second state S2. Preferably, the connector 131 is spring biased by a gas spring 135 as illustrated in figure 5. As further illustrated, one front leg 113b of the first frame part 110 comprises a recess 119 in which the gas spring 135 is arranged such that the connector 131 may be pivotably and slidably connected to the first frame part 110 at the movable pivot point 101. It should however be noted that the other front leg 113a also comprises a recess in which the connector is pivotably and slidably connected. As illustrated by an arrow in figure 5, the gas spring 135 is configured to be compressed and released, i.e., such that the load carrying structure is moved along the first frame part 110 as indicted by the arrow, whereby the load carrying member 130 is configured to be rotatable between the transportation position TP and the use position UP. It may in this context be noted that that in the preferred embodiment, there is a connector on each side of the opposite sides of the load carrying member. One or both of the connectors may be spring biased relative to the first frame part as indicated above. One or both of the connectors may be spring biased relative to the first frame part using a gas spring as indicated above.

The trolley 100, as depicted in figure 1, is in the first state S1. When the trolley 100 is in the first state S1, it is designed to be configured to be pushed/pulled on the rear wheels 125a, 125b by a user. Thereby, it is possible to move the trolley 100 between different locations. The trolley 100, as depicted in figure 2, is in the second state S2. When the trolley 100 is in the second state S2, the connecting point 104 is arranged substantially parallel to the movable pivot point 101. Further, when the trolley 100 is in the second state S2, the rear wheels 125a, 125b and the front wheels 115a, 115b are arranged at a distance D from each other.

The trolley 100 further comprises a support 118 configured to support the trolley 100 when in the first state S1. Hence, when the user has parked the trolley 100 in the first state, i.e., when the user does not push/pull the trolley 100 on the rear wheels 125a, 125b, the trolley 100 is supported by the rear wheels 125a, 125b and the support 118. The support 118 is connected to the member 117 of the first frame part 110.

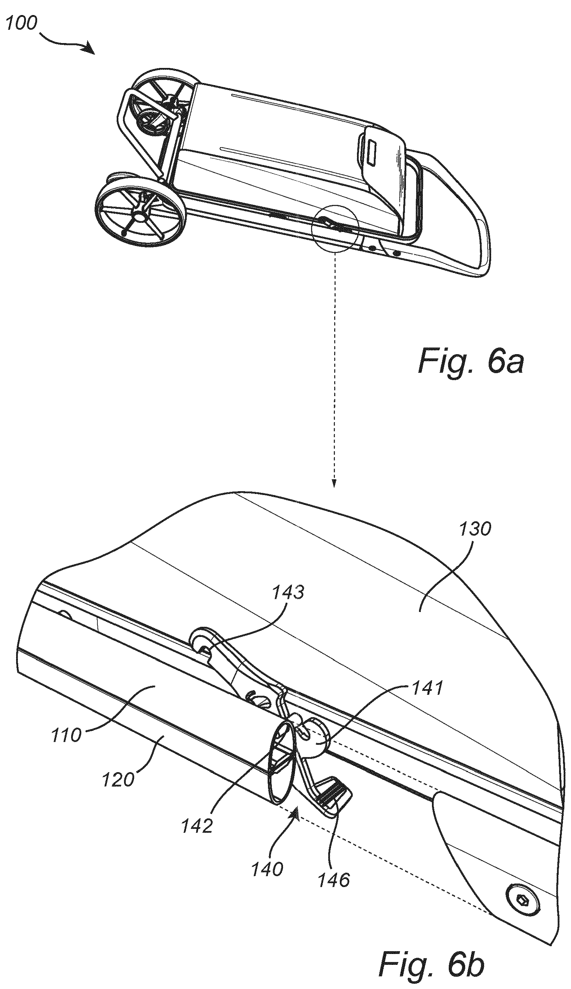

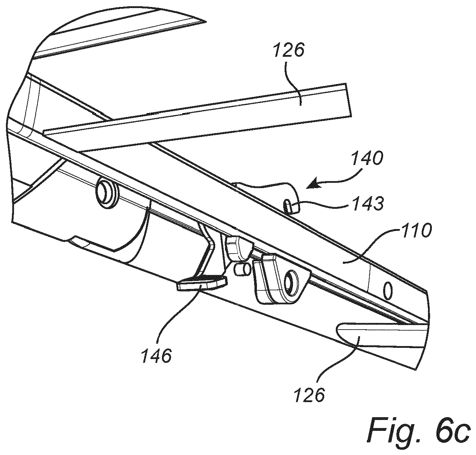

The trolley 100 further comprises a locking mechanism 140 which is pivotably connected to the load carrying structure 130. The locking mechanism 140 is configured to, when the trolley 100 is in the first state S1, lock the trolley 100 in the first state S1. The locking mechanism 140 is configured to, when the trolley 100 is in the second state S2, lock the trolley in the second state S2. The locking mechanism 140 is illustrated and discussed in more detail in connection with figures 6-8.

With reference to figure 3, the trolley 100 is illustrated to be moved from the second state S2 to the first state S1, as illustrated by the arrows depicted in figure 3, by way of example. When the trolley 100 is moved from the second state S2 to the first state S1, the second frame part 120 is rotated relative to the first frame part 110 such that the rear legs 125a, 125b and the front legs 115a, 115b are moved towards each other. Further, when the trolley 100 is moved from the second state S2 to the first state S1, the load carrying member 130 is rotated to the transportation position TP. As illustrated in figure 3, the load carrying member 130 is rotated counterclockwise to the transportation position TP. This will be discussed in more detail further below.

In addition, the trolley 100 as depicted in figure 3 comprises the similar features as introduced for the trolley 100 in connection with figures 1 and 2.

With reference to figure 4, the trolley 100 is illustrated to be moved from the first state S1 to the second state S2, as illustrated by the arrows depicted in figure 4, by way of example. When the trolley is moved from the first state S1 to the second state S2, the second frame part 120 is rotated relative to the first frame part 110 such that the rear legs 125a, 125b and the front legs 115a, 115b are moved away from each other. As best illustrated in figure 2, when the trolley 100 is in the second state S2, the rear wheels 125a, 125b and the front wheels 115a, 115b are arranged at the distance D from each other. Referring back to figure 4, when the trolley is moved from the first state S1 to the second state S2, the load carrying member 130 is rotated to the use position UP. As illustrated in figure 4, the load carrying member 130 is rotated clockwise to the use position UP. This will be discussed in more detail further below.

In addition, the trolley 100 as depicted in figure 4 comprises the similar features as introduced for the trolley 100 in connection with figures 1 and 2.

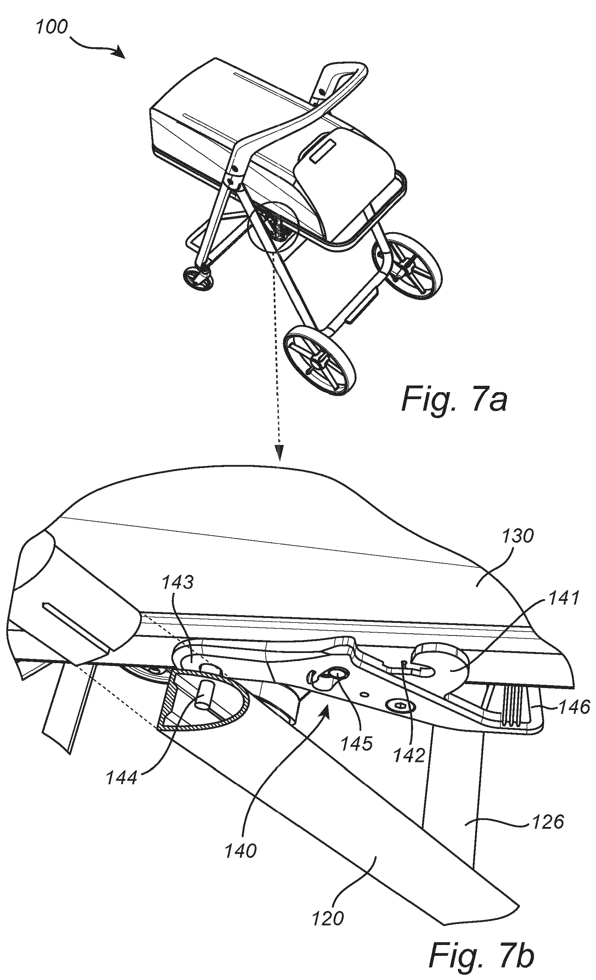

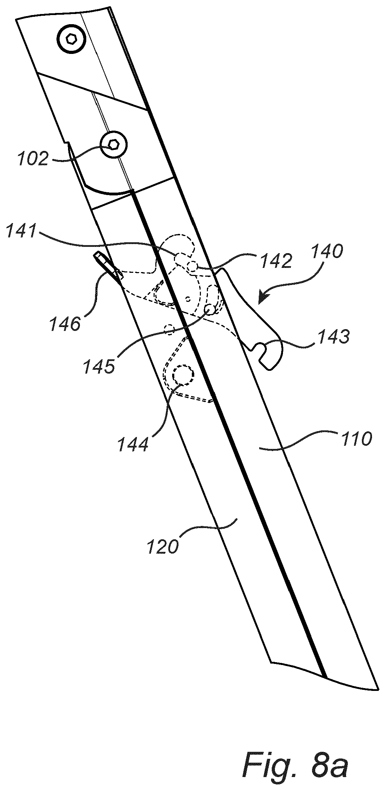

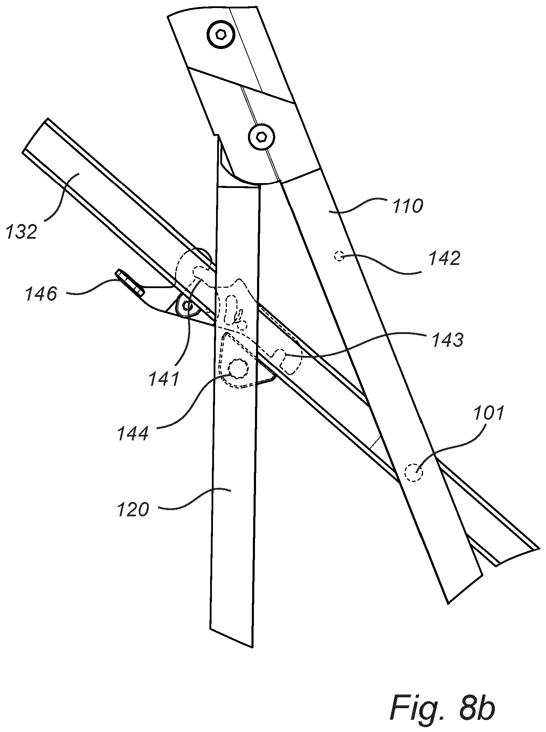

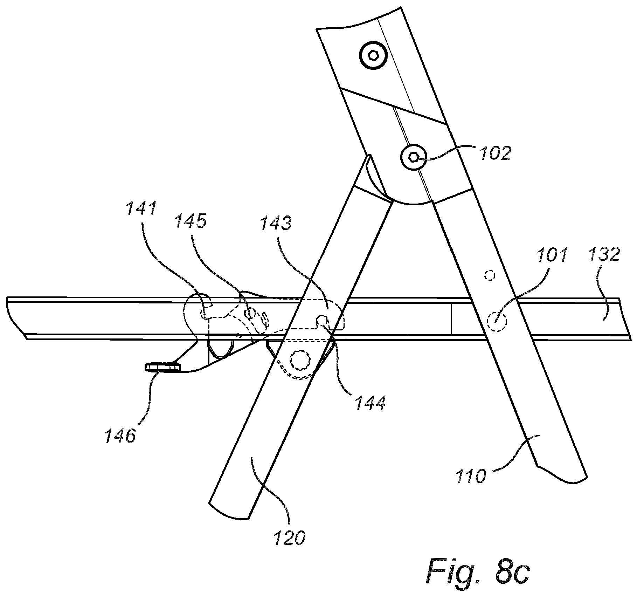

With reference to figures 6a-c, the locking mechanism 140 of the trolley 100, when the trolley 100 is in the first state S1, is illustrated by way of example. With reference to figures 7a-b, the locking mechanism 140 of the trolley 100, when the trolley 100 is in the second state S2, is illustrated by way of example. With reference to figure 8a, the locking mechanism 140 of the trolley 100, when the trolley 100 is in the first state S1, is illustrated in more detail. With reference to figure 8b, the locking mechanism 140 of the trolley 100, when the trolley 100 is moved between the first state S1 and the second S2, is illustrated by way of example. With reference to figure 8c, the locking mechanism 140 of the trolley 100, when the trolley 100 is in the second state S2, is illustrated in more detail.

The locking mechanism 140 is configured to lock the trolley 100 in the first state S1 by a first locking member 141, such as a locking hook. The first locking member 141 is pivotably connected to the load carrying member 130 at a locking pivot point 145. The first locking member 141 is configured to engage an element 142, such as a pin, which is fixedly arranged on one of the front legs 113a, 113b. The locking mechanism 140 is configured to lock the trolley 100 in the second state S2 by a second locking member 143, such as a locking hook. The second locking member 143 is pivotably connected to the load carrying member 130 at the locking pivot point 145. The second locking member 143 is configured to engage an element 144, such as a pin, which is fixedly arranged on one of the rear legs 123a, 123b.

In the preferred embodiment, and as illustrated in figures 6-8, the locking mechanism 140 locking the trolley 100 in the first state S1 is the same locking mechanism 140 locking the trolley 100 in the second state S2. Hence, the locking mechanism 140 comprises the first and second locking members 141, 143. The locking members 141, 143 are arranged at opposite ends of the locking mechanism 140. When the trolley 100 is in the first state S1, the first locking member 141 of the locking mechanism 140 is configured to lock the trolley 100 in the first state S1. When the trolley 100 is in the second state S2, the second locking mechanism 143 is configured to lock the trolley 100 in the second state S2. When the trolley 100 is moved between the first and second states S1, S2, the locking members 141, 143 are released such that the trolley 100 permits to move between the states S1, S2.

The locking mechanism 140 further comprising a connecting member 146 configured to be connected to the further handle 133a.

The locking mechanism 140 may be covered by a cover. The cover is advantageous as it may reduce the risk of that the user may get hurt, e.g. get pinched, by the locking mechanism 140. The cover has been omitted in the drawings for illustrative purposes such that the locking mechanism 140 is visible.

Referring back to figures 3 and 4, the trolley 100 may be moved between the first state S1 and the second state S2 by the user puts one hand on the handle 114 of the first frame part 110 and another hand on the further handle 133a of the frame 133 of the load carrying member 130. The further handle 133a of the load carrying member 130 is connected to the locking mechanism 140. Preferably, the further handle 133a is spring biased in relation to the locking mechanism 140. The further handle 133a is movable between a locking state and an opening state. In the locking state, the locking mechanism 140 is engaging one of the front legs 113a, 113b or one of the rear legs 123a, 123b so as to lock the trolley 100 in the first state S1 or the second state S2. In the opening state, the locking mechanism 140 is released so as to permit the trolley 100 to move from the first state S1 or the second state S2 and to be moved therefrom to the other one of the first state S1 and the second state S2. When the further handle 133a is in the opening state, the locking mechanism 140 permits to be rotated about the locking pivot point 145. When the further handle 133a is in the locking state, the locking mechanism 140 is prohibited to be rotated about the locking pivot point 145.

To move the trolley 100 from the first state S1 to the second state S2, as illustrated in figure 4, the user puts one hand on the handle 114 and the other hand on the further handle 133a. The further handle 133a is in the opening state as long as the user grips around the further handle 133a. The user pushes the other hand gripping the further handle 133a downwards in order for the movement of the trolley 100 from the first state S1 to the second state S2 to be provided. As the load carrying member 130 is moved clockwise to the use position **UP,** the front wheels 115a, 115b are applied to the ground. Once the trolley 100 is in the second state S2 and the user releases the grip of the further handle 133a, the trolley 100 is locked in the second state S2. This means, as already mentioned, that the movement from the second state S2 may never be started involuntarily and is always locked after the execution, which, unlike known technology, eliminates the risk of e.g., forget important steps or cause involuntary "cutting" or squeezing and associated consequential damage.

For movement in the opposite direction, i.e., from the second state S2 to the first state S1 as illustrated in figure 3, the above is repeated in reverse order, the trolley 100 returning to the first state S1, the front wheel being lifted again so that it does not attack the ground and the trolley 100 resting on the rear wheels 125a, 125b and the support 118.

The person skilled in the art realizes that the present invention by no means is limited to the preferred embodiments described above. On the contrary, many modifications and variations are possible within the scope of the appended claims. Additionally, variations to the disclosed embodiments may be understood and effected by the skilled person practicing the claimed invention, from a study of the drawings, the invention, and the appended claims.

## Claims

1. A trolley (100) for transporting a load of goods comprising:
a first frame part (110) having two interconnected front legs (113a, 113b), wherein the first frame part (110) comprises a handle (114) at an upper portion (111) thereof and at least one front wheel (115a, 115b) at a lower portion (112) thereof;
a second frame part (120) having two interconnected rear legs (123a, 123b), wherein the rear legs (123a, 123b) comprise two rear wheels (125a, 125b) at a lower portion (122) thereof and are each at an upper portion (121) thereof pivotably connected to a respective front leg (113a, 113b); and
a load carrying member (130) being pivotably connected to the second frame part (120) and having a connector (131) being pivotably and slidably connected to the first frame part (110),
wherein the trolley (100) is movable between a first state (S1) and a second state (S2),
wherein when moved to the first state (S1), the second frame part (120) is adapted to be rotated relative to the first frame part (110) such that the rear legs (125a, 125b) and front legs (115a, 115b) are moved towards each other and such that the load carrying member (130) is rotated such that a bottom portion of the load carrying member (130) is moved downwardly to a transportation position (TP) in which the trolley (100) is configured to transport the load of goods, wherein the load of goods is arranged close to the rear wheels (125a, 125b), the first state (S1) allowing the trolley (100) to be pushed/pulled on the rear wheels only (125a, 125b); and
wherein when moved to the second state (S2), the second frame part (120) is adapted to be rotated relative to the first frame part (110) such that lower portions of the front and rear legs (115a, 115b, 125a, 125b) are moved away from each other to be positioned at a distance (D) from each other and such that the load carrying member (130) is rotated such that the bottom portion of the load carrying member (130) is moved upwardly to a use position (UP), the second state (S2) allowing the trolley (100) to be pushed/pulled on the front wheels and the rear wheels (115a, 115b, 125a 125b).

2. The trolley (100) according to claim 1, wherein the connector (131) is spring biased relative to the first frame part (110) from a first position (P1) the connector (131) is intended to assume when the trolley (100) is in the first state (S1) towards a second position (P2) the connector (131) is intended to assume when the trolley (100) is in the second state (S2).

3. The trolley (100) according to claim 2, wherein the connector (131) is spring biased by a gas spring (135).

4. The trolley (100) according to any one of the preceding claims, wherein a movable pivot point (101), at which the connector (131) is pivotably and slidably connected to the first frame part (110), is arranged to move along a front leg (113a, 113b) of the first frame part (110) and to remain between a main pivot point (102) at which the respective rear leg (123a, 123b) is connected to the respective front leg (113a, 113b) and the lower portion (112) of the first frame part (110).

5. The trolley (100) according to claim 4, wherein, when the trolley (100) is in the first state (S1), a connecting point (104), at which the load carrying structure (130) is pivotably connected to the second frame part (120), is arranged above the movable pivot point (101), at which the connector (131) of the load carrying structure (130) is pivotably and slidably connected to the first frame part (110).

6. The trolley (100) according to any one of the preceding claims, wherein the load carrying member (130) is pivotably connected to the second frame part (120) about a fixed pivot point, the fixed pivot point being fixed relative to at least one of the second frame part (120) and the load carrying member (130), preferably being fixed relative to both.

7. The trolley (100) according to any one of the preceding claims, wherein the connector (131) is slidable along one of the front legs (113a, 113b) of the first frame part (110).

8. The trolley (100) according to any one of the preceding claims, further comprising a locking mechanism (140) pivotably connected to the load carrying structure (130) and being configured to, when the trolley (100) is in the first state (S1), engage one of the front legs (113a, 113b) so as to lock the trolley (100) in the first state (S1) and being configured to, when the trolley (100) is in the second state (S2), engage one of the rear legs (123a, 123b) so as to lock the trolley (100) in the second state (S2).

9. The trolley (100) according to claim 8, wherein the locking mechanism (140) is configured to lock the trolley (100) in the first state (S1) by a first locking member (141) being pivotably connected to the load carrying member (130) and being configured to engage an element (142) being fixedly arranged on one of the front legs (113a, 113b).

10. The trolley (100) according to claim 8 or 9, wherein the locking mechanism (140) is configured to lock the trolley (100) in the second state (S2) by a second locking member (143) being pivotably connected to the load carrying member (130) and being configured to engage an element (144) being fixedly arranged on one of the rear legs (123a, 123b).

## Patentansprüche

1. Wagen (100) zum Transportieren einer Ladung von Gütern, umfassend:
einen ersten Rahmenteil (110) mit zwei miteinander verbundenen Vorderschenkeln (113a, 113b), wobei der erste Rahmenteil (110) einen Griff (114) an einem oberen Abschnitt (111) davon und mindestens ein Vorderrad (115a, 115b) an einem unteren Abschnitt (112) davon umfasst;
ein zweites Rahmenteil (120) mit zwei miteinander verbundenen Hinterschenkeln (123a, 123b), wobei die Hinterschenkel (123a, 123b) zwei Hinterräder (125a, 125b) an einem unteren Abschnitt (122) davon umfassen und jeweils an einem oberen Abschnitt (121) davon schwenkbar mit einem jeweiligen Vorderschenkel (113a, 113b) verbunden sind; und
ein lasttragendes Element (130), das schwenkbar mit dem zweiten Rahmenteil (120) verbunden ist und einen Verbinder (131) aufweist, der schwenkbar und verschiebbar mit dem ersten Rahmenteil (110) verbunden ist,
wobei der Wagen (100) zwischen einem ersten Zustand (S1) und einem zweiten Zustand (S2) beweglich ist,
wobei, wenn er in den ersten Zustand (S1) bewegt wird, der zweite Rahmenteil (120) dazu ausgelegt ist, relativ zu dem ersten Rahmenteil (110) so gedreht zu werden, dass die Hinterschenkel (125a, 125b) und die Vorderschenkel (115a, 115b) aufeinander zu bewegt werden, und so, dass das lasttragende Element (130) so gedreht wird, dass ein unterer Abschnitt des lasttragenden Elements (130) nach unten in eine Transportposition (TP) bewegt wird, in der der Wagen (100) zum Transportieren der Ladung von Gütern ausgestaltet ist, wobei die Ladung von Gütern in der Nähe der Hinterräder (125a, 125b) angeordnet ist, wobei der erste Zustand (S1) dem Wagen (100) ermöglicht, nur auf den Hinterrädern (125a, 125b) geschoben/gezogen zu werden; und
wobei, wenn er in den zweiten Zustand (S2) bewegt wird, der zweite Rahmenteil (120) dazu ausgelegt ist, relativ zu dem ersten Rahmenteil (110) so gedreht zu werden, dass untere Abschnitte der Vorder- und Hinterschenkel (115a, 115b, 125a, 125b) so voneinander weg bewegt werden, dass sie in einem Abstand (D) voneinander positioniert werden, und so, dass das lasttragende Element (130) so gedreht wird, dass der untere Abschnitt des lasttragenden Elements (130) nach oben in eine Verwendungsposition (UP) bewegt wird, wobei der zweite Zustand (S2) dem Wagen (100) ermöglicht, auf den Vorderrädern und den Hinterrädern (115a, 115b, 125a 125b) geschoben/gezogen zu werden.

2. Wagen (100) nach Anspruch 1, wobei der Verbinder (131) relativ zu dem ersten Rahmenteil (110) von einer ersten Position (P1), die der Verbinder (131) einnehmen soll, wenn sich der Wagen (100) in dem ersten Zustand (S1) befindet, hin zu einer zweiten Position (P2), die der Verbinder (131) einnehmen soll, wenn sich der Wagen (100) in dem zweiten Zustand (S2) befindet, federvorgespannt ist.

3. Wagen (100) nach Anspruch 2, wobei der Verbinder (131) durch eine Gasfeder (135) federvorgespannt ist.

4. Wagen (100) nach einem der vorhergehenden Ansprüche, wobei ein beweglicher Drehpunkt (101), an dem der Verbinder (131) schwenkbar und verschiebbar mit dem ersten Rahmenteil (110) verbunden ist, dazu angeordnet ist, sich entlang eines Vorderschenkels (113a, 113b) des ersten Rahmenteils (110) zu bewegen und zwischen einem Hauptdrehpunkt (102), an dem der jeweilige Hinterschenkel (123a, 123b) mit dem jeweiligen Vorderschenkel (113a, 113b) verbunden ist, und dem unteren Abschnitt (112) des ersten Rahmenteils (110) zu bleiben.

5. Wagen (100) nach Anspruch 4, wobei, wenn sich der Wagen (100) in dem ersten Zustand (S1) befindet, ein Verbindungspunkt (104), an dem die lasttragende Struktur (130) schwenkbar mit dem zweiten Rahmenteil (120) verbunden ist, oberhalb des beweglichen Drehpunkts (101) angeordnet ist, an dem der Verbinder (131) der lasttragenden Struktur (130) schwenkbar und verschiebbar mit dem ersten Rahmenteil (110) verbunden ist.

6. Wagen (100) nach einem der vorhergehenden Ansprüche, wobei das lasttragende Element (130) um einen festen Drehpunkt schwenkbar mit dem zweiten Rahmenteil (120) verbunden ist, wobei der feste Drehpunkt relativ zu dem zweiten Rahmenteil (120) und/oder dem lasttragenden Element (130) fixiert ist, vorzugsweise relativ zu beiden fixiert ist.

7. Wagen (100) nach einem der vorhergehenden Ansprüche, wobei der Verbinder (131) entlang eines der Vorderschenkel (113a, 113b) des ersten Rahmenteils (110) verschiebbar ist.

8. Wagen (100) nach einem der vorhergehenden Ansprüche, ferner umfassend einen Verriegelungsmechanismus (140), der schwenkbar mit der lasttragenden Struktur (130) verbunden und dazu ausgestaltet ist, wenn sich der Wagen (100) in dem ersten Zustand (S1) befindet, einen der Vorderschenkel (113a, 113b) in Eingriff zu nehmen, um den Wagen (100) in dem ersten Zustand (S1) zu verriegeln, und dazu ausgestaltet ist, wenn sich der Wagen (100) in dem zweiten Zustand (S2) befindet, einen der Hinterschenkel (123a, 123b) in Eingriff zu nehmen, um den Wagen (100) in dem zweiten Zustand (S2) zu verriegeln.

9. Wagen (100) nach Anspruch 8, wobei der Verriegelungsmechanismus (140) dazu ausgestaltet ist, den Wagen (100) in dem ersten Zustand (S1) zu verriegeln, indem ein erstes Verriegelungselement (141) schwenkbar mit dem lasttragenden Element (130) verbunden wird, und dazu ausgestaltet ist, ein Element (142) in Eingriff zu nehmen, das fest auf einem der Vorderschenkel (113a, 113b) angeordnet ist.

10. Wagen (100) nach Anspruch 8 oder 9, wobei der Verriegelungsmechanismus (140) dazu ausgestaltet ist, den Wagen (100) in dem zweiten Zustand (S2) zu verriegeln, indem ein zweites Verriegelungselement (143) schwenkbar mit dem lasttragenden Element (130) verbunden wird, und dazu ausgestaltet ist, ein Element (144) in Eingriff zu nehmen, das fest auf einem der Hinterschenkel (123a, 123b) angeordnet ist.

## Revendications

1. Chariot (100) pour transporter une charge de marchandises, comprenant :
une première partie de cadre (110) ayant deux pieds avant (113a, 113b) interconnectés, dans lequel la première partie de cadre (110) comprend une poignée (114) au niveau d'une partie supérieure (111) de celle-ci et au moins une roue avant (115a, 115b) au niveau d'une partie inférieure (112) de celle-ci ;
une seconde partie de cadre (120) ayant deux pieds arrière (123a, 123b) interconnectés, dans lequel les pieds arrière (123a, 123b) comprennent deux roues arrière (125a, 125b) au niveau d'une partie inférieure (122) de celle-ci et sont chacun au niveau d'une partie supérieure (121) de celle-ci reliés de manière pivotante à un pied avant (113a, 113b) respectif ; et
un élément porteur de charge (130) relié de manière pivotante à la seconde partie de cadre (120) et ayant un connecteur (131) relié de manière pivotante et de manière coulissante à la première partie de cadre (110),
dans lequel le chariot (100) est mobile entre un premier état (S1) et un second état (S2),
dans lequel lorsqu'elle est déplacée vers le premier état (S1), la seconde partie de cadre (120) est adaptée pour tourner par rapport à la première partie de cadre (110) de telle sorte que les pieds arrière (125a, 125b) et les pieds avant (115a, 115b) sont déplacés l'un vers l'autre et de telle sorte que l'élément porteur de charge (130) tourne de telle sorte qu'une partie inférieure de l'élément porteur de charge (130) est déplacée vers le bas jusqu'à une position de transport (TP) dans laquelle le chariot (100) est configuré pour transporter la charge de marchandises, dans lequel la charge de marchandises est agencée à proximité des roues arrière (125a, 125b), le premier état (S1) permettant au chariot (100) d'être poussé/tiré sur les roues arrière uniquement (125a, 125b) ; et
dans lequel lorsqu'elle est déplacée vers le second état (S2), la seconde partie de cadre (120) est adaptée pour tourner par rapport à la première partie de cadre (110) de telle sorte que des parties inférieures des pieds avant et arrière (115a, 115b, 125a, 125b) sont éloignées l'une de l'autre pour être positionnées à une distance (D) l'une de l'autre et de telle sorte que l'élément porteur de charge (130) tourne de telle sorte que la partie inférieure de l'élément porteur de charge (130) est déplacée vers le haut jusqu'à une position d'utilisation (UP), le second état (S2) permettant au chariot (100) d'être poussé/tiré sur les roues avant et les roues arrière (115a, 115b, 125a, 125b).

2. Chariot (100) selon la revendication 1, dans lequel le connecteur (131) est sollicité par ressort par rapport à la première partie de cadre (110) d'une première position (P1) que le connecteur (131) est destiné à prendre lorsque le chariot (100) est dans le premier état (S1) vers une seconde position (P2) que le connecteur (131) est destiné à prendre lorsque le chariot (100) est dans le second état (S2).

3. Chariot (100) selon la revendication 2, dans lequel le connecteur (131) est sollicité par ressort par un ressort à gaz (135).

4. Chariot (100) selon l'une quelconque des revendications précédentes, dans lequel un point de pivotement mobile (101), au niveau duquel le connecteur (131) est relié de manière pivotante et de manière coulissante à la première partie de cadre (110), est agencé pour se déplacer le long d'un pied avant (113a, 113b) de la première partie de cadre (110) et pour rester entre un point de pivotement principal (102) au niveau duquel le pied arrière (123a, 123b) respectif est relié au pied avant (113a, 113b) respectif et la partie inférieure (112) de la première partie de cadre (110).

5. Chariot (100) selon la revendication 4, dans lequel, lorsque le chariot (100) est dans le premier état (S1), un point de connexion (104), au niveau duquel la structure porteuse de charge (130) est reliée de manière pivotante à la seconde partie de cadre (120), est agencé au-dessus du point de pivotement mobile (101), au niveau duquel le connecteur (131) de la structure porteuse de charge (130) est relié de manière pivotante et de manière coulissante à la première partie de cadre (110).

6. Chariot (100) selon l'une quelconque des revendications précédentes, dans lequel l'élément porteur de charge (130) est relié de manière pivotante à la seconde partie de cadre (120) autour d'un point de pivotement fixe, le point de pivotement fixe étant fixe par rapport à au moins l'un de la seconde partie de cadre (120) et de l'élément porteur de charge (130), de préférence fixe par rapport aux deux.

7. Chariot (100) selon l'une quelconque des revendications précédentes, dans lequel le connecteur (131) peut coulisser le long de l'un des pieds avant (113a, 113b) de la première partie de cadre (110).

8. Chariot (100) selon l'une quelconque des revendications précédentes, comprenant en outre un mécanisme de verrouillage (140) relié de manière pivotante à la structure porteuse de charge (130) et étant configuré pour, lorsque le chariot (100) est dans le premier état (S1), mettre en prise l'un des pieds avant (113a, 113b) de manière à verrouiller le chariot (100) dans le premier état (S1) et étant configuré pour, lorsque le chariot (100) est dans le second état (S2), mettre en prise l'un des pieds arrière (123a, 123b) de manière à verrouiller le chariot (100) dans le second état (S2).

9. Chariot (100) selon la revendication 8, dans lequel le mécanisme de verrouillage (140) est configuré pour verrouiller le chariot (100) dans le premier état (S1) par un premier élément de verrouillage (141) relié de manière pivotante à l'élément porteur de charge (130) et configuré pour mettre en prise un élément (142) agencé de manière fixe sur l'un des pieds avant (113a, 113b).

10. Chariot (100) selon la revendication 8 ou 9, dans lequel le mécanisme de verrouillage (140) est configuré pour verrouiller le chariot (100) dans le second état (S2) par un second élément de verrouillage (143) relié de manière pivotante à l'élément porteur de charge (130) et configuré pour mettre en prise un élément (144) agencé de manière fixe sur l'un des pieds arrière (123a, 123b).
